# EUROPÄISCHE PATENTSCHRIFT

(11) **EP 3 585 637 B1**
(45) Veröffentlichungstag und Bekanntmachung des Hinweises auf die Patenterteilung: **20.07.2022**
(21) Anmeldenummer: 18707649.2
(22) Anmeldetag: 15.02.2018
(51) Int. Cl.: B60K 35/00, B60R 11/02, G01C 21/36, G06F 3/14, G09G 3/00, G06F 3/0488, G09F 9/00, B60R 11/00

(54) **ANZEIGEEINRICHTUNG**
DISPLAY DEVICE
DISPOSITIF D'AFFICHAGE

(30) Priorität: 27.02.2017 DE 102017203167
(43) Veröffentlichungstag der Anmeldung: 01.01.2020
(73) Patentinhaber: Audi AG, 85045 Ingolstadt (DE)
(72) Erfinder: WALL, Christian, 85122 Hitzhofen (DE)
(86) Internationale Anmeldenummer: PCT/EP2018/053760
(87) Internationale Veröffentlichungsnummer: WO 2018/153766

(56) Entgegenhaltungen:
- EP-A1- 1 947 636
- EP-A2- 2 902 870
- DE-A1-102012 010 679
- DE-A1-102013 004 395
- JP-A- 2007 298 838

## Beschreibung

Die Erfindung betrifft eine Anzeigeeinrichtung für eine Innenwand eines Innenraums eines Fahrzeugs und ein Verfahren zum Darstellen eines Anzeigeinhalts in einem Innenraum eines Fahrzeugs.

Ein Display bzw. ein Anzeigefeld weist üblicherweise einen definierten Abstrahlwinkel auf. Außerdem sind sogenannte Dual View-Displays bekannt, bei denen aus zwei unterschiedlichen Richtungen unterschiedliche Bilder sichtbar sind. Allerdings ist diesbezüglich zu berücksichtigen, dass diese Dual View-Displays aufgrund ihrer Eigenschaften ein jeweiliges Bild bzw. Teilbild nur mit einer halben Auflösung des gesamten Displays darstellen.

Ein faltbares Anzeigegerät ist aus der Druckschrift US 2012/0235894 A1 bekannt. Dabei umfasst dieses Anzeigegerät zwei Anzeigefelder, die miteinander verbunden und entlang einer gemeinsamen Achse relativ zueinander unter einem Winkel positionierbar sind. Bei einem Betrieb dieses Anzeigesystems werden Teilanzeigen der Teildisplays zu einer gemeinsamen Anzeige winkelabhängig zusammengesetzt.

Ein Anzeigegerät und ein Verfahren zu dessen Betrieb sind in der Druckschrift EP 2 902 870 A2 beschrieben. Auch dieses Anzeigegerät umfasst zwei Teildisplays, die unter einem Winkel relativ zueinander positionierbar sind, wobei ein Anzeigeinhalt dieser beiden Displays winkelabhängig zu einem gemeinsamen Anzeigeinhalt fusioniert werden.

Weiterhin zeigt die Druckschrift DE 20 2004 012 734 A1 einen Flachbildschirm, der aus Bildpunkten zusammengesetzt ist, wobei dessen Bildfläche in mindestens zwei Zonen aufgeteilt ist, wobei eine Zone mit einem aufgebrachten Abstrahlungsfilter versehen ist, das pro Bildpunkt in unterschiedlichen Richtungen abstrahlt.

Die Druckschrift EP 1 947 636 A1 beschreibt ein Anzeigegerät und ein Navigationsgerät.

Ein Anzeigegerät und ein Verfahren zu dessen Betrieb sind in der Druckschrift EP 2 902 870 A2 beschrieben.

Eine Anzeigeeinrichtung ist aus der Druckschrift DE 10 2012 010 679 A1 bekannt.

Die Druckschrift DE 10 2013 004 395 A1 beschreibt einen Bildschirm zum Senden eines oder mehrerer Programme, die aus verschiedenen Blickwinkeln gesehen werden können.

Ein weiteres Anzeigegerät sowie ein Informationsprozessor und ein Kommunikationsgerät sind aus der Druckschrift JP 2007/298838 A bekannt.

Vor diesem Hintergrund war es eine Aufgabe, eine Anzeigeeinrichtung in einem Fahrzeug hinsichtlich eines jeweils damit darzustellenden Anzeigeinhalts zu optimieren.

Diese Aufgabe wird mit einer Anzeigeeinrichtung und einem Verfahren mit den Merkmalen der unabhängigen Patentansprüche gelöst. Ausführungsformen der Anzeigeeinrichtung und des Verfahrens gehen aus den abhängigen Patentansprüchen und der Beschreibung hervor.

Die erfindungsgemäße Anzeigeeinrichtung ist an einer Innenwand in einem Innenraum eines Fahrzeugs anordenbar und/oder anzuordnen sowie in mehrere Anzeigefelder unterteilt. Dabei sind jeweils zwei unmittelbar benachbarte Anzeigefelder entlang einer gemeinsamen Achse, bspw. Biegeachse, miteinander verbunden, wobei diese zwei unmittelbar benachbarten Anzeigefelder um die gemeinsame Achse relativ zueinander schwenkbar sind. Die Anzeigeeinrichtung weist mindestens eine Biegeebene auf, wobei mindestens ein Anzeigefeld auch relativ zu der mindestens einen Biegeebene schwenkbar ist, wobei für dieses mindestens eine relativ zu der mindestens einen Biegeebene schwenkbare Anzeigefeld ein Winkel α einstellbar und/oder eingestellt ist, unter dem dieses mindestens eine relativ zu der mindestens einen Biegeebene schwenkbare Anzeigefeld einen Anzeigeinhalt je nach Definition bspw. im Uhrzeigersinn oder entgegen dem Uhrzeigersinn relativ zu der mindestens einen Biegeebene in den Innenraum abstrahlt, wenn eine Oberfläche dieses mindestens einen relativ zu der mindestens einen Biegeebene schwenkbaren Anzeigefelds in einer ersten Betriebsstellung je nach Definition bspw. senkrecht zu der mindestens einen Biegeebene orientiert ist. Dieses mindestens eine relativ zu der mindestens einen Biegeebene schwenkbare Anzeigefeld ist in einer zweiten Betriebsstellung je nach Definition im Uhrzeigersinn oder entgegen dem Uhrzeigersinn unter einem Winkel 90°-a relativ zu der mindestens einen Biegeebene geschwenkt.

Dabei strahlt dieses mindestens eine relativ zu der Biegeebene schwenkbare Anzeigefeld den Anzeigeinhalt in der zweiten Betriebsstellung parallel zu der mindestens einen Biegeebene in den Innenraum ab. Eine Achse, um die zwei unmittelbar benachbarten Anzeigefelder relativ zueinander schwenkbar sind, verläuft in Ausgestaltung durch die mindestens eine Biegeebene, zu der das mindestens eine Anzeigefeld relativ schwenkbar sowie dieser zugeordnet ist.

Bei der Anzeigeeinrichtung ist bspw. vorgesehen, dass deren mindestens eine Biegeebene unter einem jeweils vorgesehenen Winkel, in der Regel senkrecht, zu einer Oberfläche der Innenwand orientierbar und/oder zu orientieren ist. Falls die Anzeigeeinrichtung mehrere schwenkbare Anzeigefelder aufweist, sind diese der mindestens einen Biegeebene zugeordnet. Dabei ist es möglich, dass jedes Anzeigefeld einer eigenen Biegeebene zugeordnet ist. Entsprechend ist es möglich, dass mindestens eine Biegeebene mindestens einem schwenkbaren Anzeigefeld zugeordnet ist.

Außerdem ist es möglich, dass der für das mindestens eine relativ zu der mindestens einen Biegeebene schwenkbare Anzeigefeld vorgesehene Winkel α ein spitzer Winkel und somit größer -90° und kleiner +90° ist. Dabei ist es je nach Definition, bspw. in Abhängigkeit des Uhrzeigersinns, möglich, dass ein jeweiliger Winkel α, der für ein jeweiliges schwenkbares Anzeigefeld vorgesehen ist, einen positiven oder einen negative Wert aufweist.

In Ausgestaltung weist die Anzeigeeinrichtung mindestens ein Paar Anzeigefelder auf, die beide relativ zu der mindestens einen Biegeebene, also nur einer oder jeweils einer Biegeebene, schwenkbar sowie zueinander korrelierbar und/oder korreliert sind. Dabei sind Oberflächen beider Anzeigefelder in der ersten Betriebsstellung senkrecht zu der mindestens einen Biegeebene orientiert, wobei die beiden Anzeigefelder einen jeweiligen Anzeigeinhalt unter einem jeweiligen Winkel α relativ zu der mindestens einen Biegeebene und unter einem Winkel 90°-a relativ zu der eigenen Oberfläche abstrahlen, wobei der Winkel α für ein erstes der beiden Anzeigefelder je nach Definition, bspw. unter Berücksichtigung des Uhrzeigersinns, einen positiven bzw. negativen Wert und für ein zweites der beiden Anzeigefelder je nach Definition, bspw. unter Berücksichtigung des Uhrzeigersinns, einen negativen bzw. positiven Wert aufweist, wobei die beiden Anzeigefelder die Anzeigeinhalte in unterschiedlichen Richtungen abstrahlen, die unter einem doppelten Winkel α bzw. einem Winkel 2α mit einem je nach Definition positiven oder negativen Wert zueinander orientiert sind.

Die Oberfläche des ersten der beiden Anzeigefelder ist in der zweiten Betriebsstellung unter einem Winkel 90°-a mit einem je nach Definition positiven bzw. negativen Wert relativ zu der mindestens einen Biegeebene geschwenkt, wobei die Oberfläche des zweiten der beiden Anzeigefelder in der zweiten Betriebsstellung unter einem Winkel 90°-a mit einem je nach Definition negativen bzw. positiven Wert relativ zu der mindestens einen Biegeebene geschwenkt ist, wobei die beiden Anzeigefelder die Anzeigeinhalte in der zweiten Betriebsstellung zueinander parallel abstrahlen.

Diesbezüglich ist es weiterhin möglich, dass die mindestens eine Biegeebene zwischen den beiden Anzeigefeldern des mindestens einen Paars Anzeigefeldern angeordnet ist, wobei die beiden Anzeigefelder den Anzeigeinhalt in der ersten Betriebsstellung jeweils weg von der mindestens einen Biegeebene abstrahlen.

Außerdem ist es möglich, dass abhängig von einer Perspektive das erste Anzeigefeld je nach Definition links bzw. rechts von der mindestens einen Biegeebene und das zweite Anzeigefeld entsprechend rechts bzw. links von der mindestens einen Biegeebene angeordnet ist. Hierbei strahlt das erste Anzeigefeld links bzw. rechts von der mindestens einen Biegeebene den Anzeigeinhalt in der ersten Betriebsstellung weg von der mindestens einen Biegeebene nach links bzw. rechts und das zweite Anzeigefeld rechts bzw. links von der mindestens einen Biegeebene den Anzeigeinhalt in der ersten Betriebsstellung weg von der mindestens einen Biegeebene nach rechts bzw. links ab.

In Ausgestaltung ist es vorgesehen, dass der Winkel α für das mindestens eine Anzeigefeld üblicherweise für beide Betriebsstellungen fest eingestellt ist. Entsprechend ist der Winkel 90°-a, unter dem der Anzeigeinhalt eines jeweiligen schwenkbaren Anzeigefelds abgestrahlt wird, für beide Betriebsstellungen fest eingestellt und konstant. Allerdings ist es auch möglich, dass der Winkel α auch variierbar und je nach Bedarf einstellbar ist. Somit ist für den Winkel α ein für mindestens einen Nutzer der Anzeigeeinrichtung geeigneter und/oder gewünschter Wert fest einstellbar und speicherbar.

Ergänzend ist es möglich, dass die Anzeigeeinrichtung mindestens ein weiteres Anzeigefeld aufweist, das relativ zu der mindestens einen Biegeebene ortsfest angeordnet und/oder fixiert ist sowie relativ zu der Innenwand ortsfest fixierbar ist, wobei eine Oberfläche dieses mindestens einen fixierten Anzeigefelds senkrecht zu der mindestens einen Biegeebene orientiert ist, wobei dieses mindestens eine fixierte Anzeigefeld den Anzeigeeinhalt in beiden Betriebsstellungen und somit unabhängig von einer jeweiligen Betriebsstellung des mindestens einen schwenkbaren Anzeigefelds parallel zu der mindestens einen Biegeebene ausstrahlt. In der ersten Betriebsstellung ist der Anzeigeinhalt mindestens eines schwenkbaren Anzeigefelds unter den Winkel α relativ zu dem Anzeigeinhalt des mindestens einen fixierten Anzeigefelds orientiert, wohingegen Anzeigeinhalte des mindestens einen schwenkbaren und des mindestens einen fixierten Anzeigefelds in der zweiten Betriebsstellung zueinander parallel orientiert sind.

Somit es auch möglich, dass die Anzeigeeinrichtung mindestens ein Paar relativ zu der mindestens einen Biegeebene schwenkbarer sowie zueinander korrelierbarer und/oder korrelierter Anzeigefelder und mindestens ein relativ zu der mindestens einen Biegeebene fixiertes Anzeigefeld aufweist, wobei das mindestens eine relativ zu der mindestens einen Biegeebene fixierte Anzeigefeld in der Regel zwischen den beiden relativ zu der mindestens einen Biegeebene schwenkbaren Anzeigefeldern des mindestens einen Paars angeordnet ist.

Die Anzeigeeinrichtung umfasst in Ausgestaltung mindestens eine Halteeinrichtung, die zwei zueinander parallel angeordnete Außenflächen aufweist, wobei eine erste der beiden Außenflächen mit mindestens einem der Anzeigefelder verbunden ist, wobei eine zweite der beiden Außenflächen an der Innenwand befestigbar und/oder zu befestigen ist.

Die Anzeigeeinrichtung ist üblicherweise an einer in einer Vorwärtsfahrtrichtung des Fahrzeugs vorne angeordneten Innenwand des Innenraums des Fahrzeugs zwischen zwei Sitzen des Fahrzeugs anordenbar und/oder anzuordnen, wobei das mindestens eine relativ zu der mindestens einen Biegeebene schwenkbare Anzeigefeld den Anzeigeinhalt in der ersten Betriebsstellung in Richtung eines der beiden Sitze abstrahlt. Falls die Anzeigeeinrichtung mindestens ein Paar zueinander korrelierter schwenkbarer Anzeigefelder aufweist, strahlt jeweils ein Anzeigefeld einen jeweiligen Anzeigeinhalt in Richtung jeweils eines Sitzes zum Innenraum des Fahrzeugs ab.

Das erfindungsgemäße Verfahren ist zum Darstellen mindestens eines Anzeigeeinhalts in einem Innenraum eines Fahrzeugs mit einer Anzeigeeinrichtung vorgesehen, die an einer Innenwand in einem Innenraum eines Fahrzeugs angeordnet wird sowie in mehrere Anzeigefelder unterteilt ist, wobei zwei unmittelbar benachbarte Anzeigefelder entlang einer gemeinsamen Achse, bspw. Biegeachse, miteinander verbunden sind, wobei diese zwei unmittelbar benachbarten Anzeigefelder um die gemeinsame Achse relativ zueinander schwenkbar sind. Die Anzeigeeinrichtung weist mindestens eine Biegeebene auf, wobei mindestens ein Anzeigefeld dieser mindestens einen Biegeebene zugeordnet und auch relativ zu der mindestens einen Biegeebene schwenkbar ist, wobei für dieses mindestens eine relativ zu der mindestens einen Biegeebene schwenkbare Anzeigefeld ein Winkel α eingestellt wird, unter dem ein Anzeigeinhalt dieses mindestens einen relativ zu der mindestens einen Biegeebene schwenkbaren Anzeigefelds je nach Definition im oder entgegen dem Uhrzeigersinn relativ zu der mindestens einen Biegeebene in den Innenraum abgestrahlt wird, wenn eine Oberfläche dieses mindestens einen relativ zu der mindestens einen Biegeebene schwenkbaren Anzeigefelds in einer ersten Betriebsstellung senkrecht zu der mindestens einen Biegeebene orientiert wird. Dieses mindestens einen relativ zu der mindestens einen Biegeebene schwenkbare Anzeigefeld wird in einer zweiten Betriebsstellung je nach Definition im oder entgegen dem Uhrzeigersinn unter einem Winkel 90°-a relativ zu der mindestens einen Biegeebene geschwenkt, wobei der Anzeigeinhalt dieses mindestens einen relativ zu der Biegeebene schwenkbaren Anzeigefelds in der zweiten Betriebsstellung parallel zu der mindestens einen Biegeebene abgestrahlt wird. Der Anzeigeinhalt des mindestens einen schwenkbaren Anzeigefelds wird in beiden genannten Betriebsstellungen jeweils unter einem Winkel 90°-a relativ zu seiner Oberfläche abgestrahlt.

Insgesamt ist die vorgestellte Anzeigeeinrichtung flexibel ausgebildet, wobei mit deren Anzeigefeldern bzw. Displays ein Anzeigeinhalt bzw. Anzeigeinhalte in der ersten Betriebsstellung unter unterschiedlichen Winkeln und in der zweiten Betriebsstellung unter demselben Winkel in den Innenraum des Fahrzeugs abgestrahlt werden.

Dabei ist die Anzeigeeinrichtung in mindestens zwei Anzeigefelder und somit in zwei Sichtbereiche unterteilt. Dabei wird jedem Anzeigefeld bspw. durch einen speziellen Light Control Film ein eigener spezifischer Abstrahlwinkel und somit Winkel α zugeordnet, wobei dieser Winkel α je nach Position mindestens eines schwenkbaren Anzeigefelds relativ zu der mindestens einen Biegeebene unter Berücksichtigung des Uhrzeigersinns eingestellt wird. Dabei ist es möglich, dass dieser Winkel je nach Definition sowie unter Berücksichtigung des Uhrzeigersinns einen positiven oder einen negativen Wert aufweist. Aufgrund einer Flexibilität der Anzeigeeinrichtung ist es möglich, einen Übergang zwischen zwei unmittelbar benachbarten Anzeigefeldern bzw. Displays oder Sichtbereichen bspw. über eine Kinematik, zu biegen, die bspw. in der gemeinsamen Achse und/oder der Halteeinrichtung integriert ist. Somit ist es u. a. möglich, die Abstrahlrichtung des Winkels eines schwenkbaren Anzeigefelds zu manipulieren. Bei einem Einsatz einer Ausführungsform der Anzeigeeinrichtung unter Durchführung einer Ausführungsform des Verfahrens sind abhängig von einer Ausrichtung eines jeweiligen Anzeigefelds unterschiedliche Sichtbarkeiten des damit darstellbaren Anzeigeinhalts realisierbar.

Es versteht sich, dass die voranstehend genannten und die nachstehend noch zu erläuternden Merkmale nicht nur in der jeweils angegebenen Kombination sowie auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung eine erste Ausführungsform der erfindungsgemäßen Anzeigeeinrichtung in unterschiedlichen Betriebszuständen, die sich bei Durchführung von unterschiedlichen Schritten einer ersten Ausführungsform des erfindungsgemäßen Verfahrens ergeben.
Figur 2 zeigt in schematischer Darstellung eine zweite Ausführungsform der erfindungsgemäßen Anzeigeeinrichtung in unterschiedlichen Betriebszuständen, die sich bei Durchführung von unterschiedlichen Schritten einer zweiten Ausführungsform des erfindungsgemäßen Verfahrens ergeben.

Die Figuren werden zusammenhängend und übergreifend beschrieben, gleichen Komponenten sind dieselben Bezugsziffern zugeordnet.

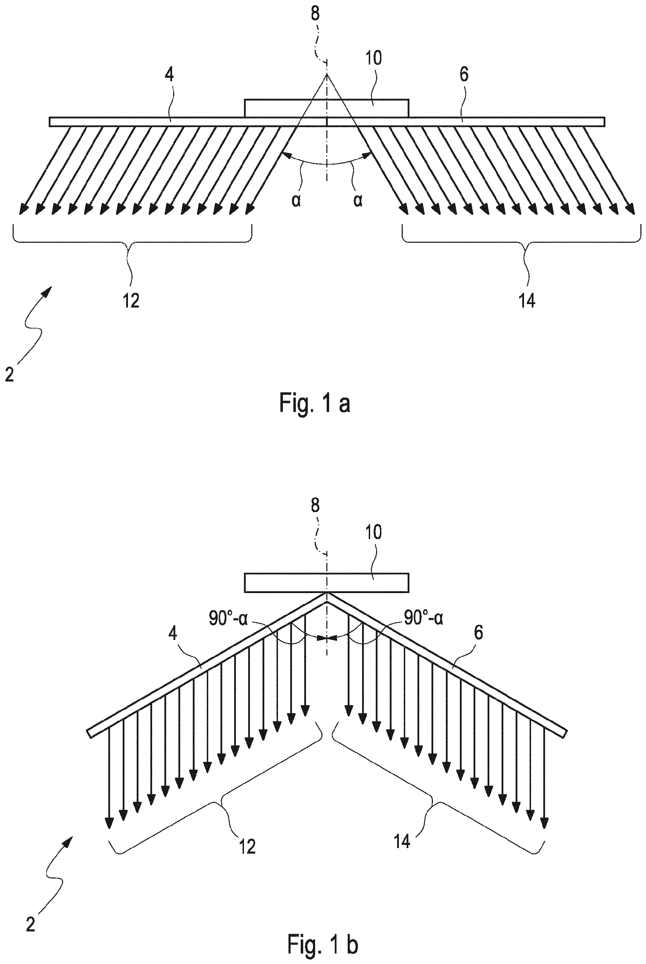

Die erste Ausführungsform der erfindungsgemäßen Anzeigeeinrichtung 2 ist in der Figur 1a in einer ersten Betriebsstellung und in Figur 1b in einer zweiten Betriebsstellung schematisch dargestellt. Diese Anzeigeeinrichtung 2 umfasst hier ein erstes Anzeigefeld 4 sowie ein zweites Anzeigefeld 6. Weiterhin ist bei der Anzeigeeinrichtung 2 eine Biegeebene 8 definiert, die in der ersten Betriebsstellung (Figur 1a) senkrecht zu den Oberflächen beider Anzeigefelder 4, 6 orientiert ist, wobei die Oberflächen beider Anzeigefelder 4, 6 in der ersten Betriebsstellung parallel zueinander sowie nebeneinander in einer gemeinsamen Ebene angeordnet sind, die ebenfalls senkrecht zu der Biegeebene 8 orientiert ist. Dabei bilden diese beiden Anzeigefelder 4, 6 ein Paar von zu der Biegeebene 8 symmetrisch angeordneten sowie relativ zu der Biegeebene 8 gegensinnig schwenkbaren Anzeigefeldern 4, 6, wobei eine gemeinsame Achse, um die diese hier unmittelbar benachbarten Anzeigefelder 4, 6 schwenkbar sind, durch die Biegeebene 8 verläuft.

Ferner umfasst die Anzeigeeinrichtung 2 hier eine Halteeinrichtung 10 mit einer ersten Außenfläche bzw. Außenseite, an der die beiden Anzeigefelder 4, 6 schwenkbar befestigt sind. Außerdem umfasst die Halteeinrichtung 10 eine zweite Außenfläche bzw. Außenseite, über die die Halteeinrichtung 10 und somit auch die gesamte Anzeigeeinrichtung 2 an einer Innenwand eines Fahrzeugs, bspw. an einer Mittelkonsole zwischen zwei vorderen Sitzen des Fahrzeugs, anordenbar ist.

In der ersten Betriebsstellung ist vorgesehen, dass ein Anzeigeinhalt 12 des ersten Anzeigefelds 4, das hier links von der Biegeebene 8 angeordnet ist, unter einem Winkel α, der hier im Uhrzeigersinn von der Anzeigeebene 8 nach links geschwenkt ist, nach links abgestrahlt wird. Entsprechend wird der erste Anzeigeinhalt 12 relativ zu einer Oberfläche des ersten Anzeigefelds 4 unter einem Winkel 90°-a nach links abgestrahlt. Dagegen wird ein zweiter Anzeigeinhalt 14 des zweiten Anzeigefelds 6 ebenfalls unter dem Winkel α, der hier allerdings von der Biegeebene 8 entgegen dem Uhrzeigersinn nach rechts geschwenkt ist, abgestrahlt. Entsprechend wird der zweite Anzeigeinhalt 14 relativ zu einer Oberfläche des zweiten Anzeigefelds 6 unter einem Winkel 90°-α nach rechts abgestrahlt. Somit ist der erste Anzeigeinhalt 12 in der ersten Betriebsstellung aus einer ersten Perspektive und der zweite Anzeigeinhalt 14 in der ersten Betriebsstellung aus einer zweiten Perspektive sichtbar, wobei Richtungen dieser beiden Anzeigeinhalte 12, 14 insgesamt unter einem doppelten Winkel α bzw. einem Winkel 2α zueinander orientiert sind.

In der anhand von Figur 1b vorgesehenen zweiten Betriebsstellung ist vorgesehen, dass das erste links angeordnete Anzeigefeld 4 unter einem Winkel 90°-a entgegen dem Uhrzeigersinn hin zu der Biegeebene 8 nach rechts geschwenkt ist, wohingegen das rechte zweite Anzeigefeld 6 ebenfalls unter dem Winkel 90°-a im Uhrzeigersinn nach links hin zu der Biegeebene 8 geschwenkt ist.

Allerdings ist vorgesehen, dass ein jeweiliger Winkel 90°-a, unter dem ein Anzeigeinhalt 12, 14 eines jeweiligen Anzeigefelds 4, 6 in Bezug auf die erste Betriebsstellung relativ zu einer jeweiligen Oberfläche des jeweiligen Anzeigefelds 4, 6 abgestrahlt wird, auch in der zweiten Betriebsstellung beibehalten wird, wodurch sich ergibt, dass die Anzeigeinhalte 12, 14 beider Anzeigefelder 4, 6 in der zweiten Betriebsstellung zueinander parallel so wie auch parallel zu der Biegeebene 8 abgestrahlt werden.

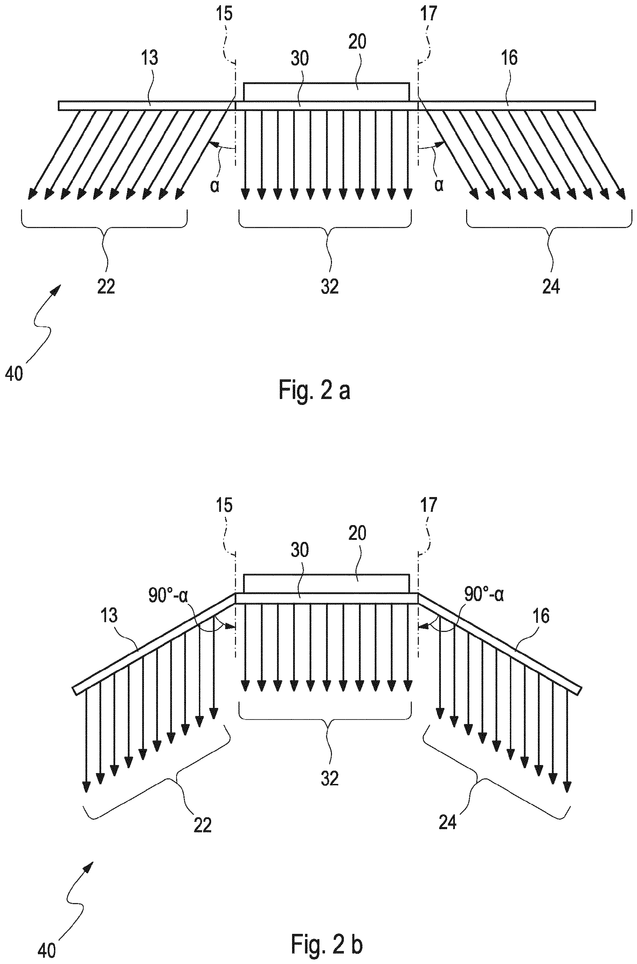

Die zweite Ausführungsform der erfindungsgemäßen Anzeigeeinrichtung 40 ist in der Figur 2a in einer ersten Betriebsstellung und in Figur 2b in einer zweiten Betriebsstellung schematisch dargestellt. Diese Anzeigeeinrichtung 40 umfasst hier ein erstes Anzeigefeld 13, ein zweites Anzeigefeld 16 und ein drittes fixiertes Anzeigefeld 30, das zwischen dem ersten und zweiten Anzeigefeld 13, 16 angeordnet ist. Weiterhin sind für die Anzeigeeinrichtung 40 eine erste Biegeebene 15, die dem ersten Anzeigefeld 13 zugeordnet ist, und eine zweite Biegeebene 17, die dem zweiten Anzeigefeld 16 zugeordnet ist, definiert.

Hierbei verläuft eine erste Achse, um die das erste Anzeigefeld 13 relativ zu dem unmittelbar benachbarten dritten Anzeigefeld 30 schwenkbar ist, durch die erste Biegeebene 15. Das zweite Anzeigefeld 16 ist relativ zu dem unmittelbar benachbarten dritten Anzeigefeld 30 um eine zweite Achse schwenkbar, die durch die zweite Biegeebene 17 verläuft. Die beiden zueinander parallelen Biegeebenen 15, 17 sind in der ersten Betriebsstellung (Figur 2a) senkrecht zu den Oberflächen aller drei Anzeigefelder 13, 16, 30 orientiert, wobei die Oberflächen der Anzeigefelder 13, 16, 30 in der ersten Betriebsstellung parallel zueinander sowie nebeneinander in einer gemeinsamen Ebene angeordnet sind, die ebenfalls senkrecht zu den zueinander parallelen Biegeebenen 15, 17 orientiert sind.

Ferner umfasst die Anzeigeeinrichtung 40 hier eine Halteeinrichtung 20 mit einer ersten Außenfläche, an der das dritte Anzeigefeld 30 ortsfest befestigt und somit fixiert ist. Außerdem umfasst die Halteeinrichtung 20 eine zweite Außenfläche, über die die Halteeinrichtung 20 und somit auch die gesamte Anzeigeeinrichtung 40 an einer Innenwand eines Fahrzeugs, bspw. an einer Mittelkonsole zwischen zwei vorderen Sitzen des Fahrzeugs, anordenbar ist. Die erste Außenfläche sowie die dazu parallele zweite Außenfläche der Halteeinrichtung 20 sind senkrecht zu den beiden Biegeebenen 15, 17 orientiert. Das erste Anzeigefeld 13 ist relativ zu der ihr zugeordneten ersten Biegeebene 15, dem dritten Anzeigefeld 30 und der Halteeinrichtung 20 und somit auch der Innenwand schwenkbar. Außerdem ist das zweite Anzeigefeld 16 relativ zu der ihr zugeordneten zweiten Biegeebene 17, dem dritten Anzeigefeld 30 und der Halteeinrichtung 20 und somit auch der Innenwand schwenkbar.

In der ersten Betriebsstellung ist vorgesehen, dass ein Anzeigeinhalt 22 des ersten Anzeigefelds 13, das hier links von der ersten Biegeebene 8 und dem dritten Anzeigefeld 30 angeordnet ist, unter einem Winkel α, der hier im Uhrzeigersinn von der Anzeigeebene 8 nach links geschwenkt ist, nach links abgestrahlt wird. Entsprechend wird der erste Anzeigeinhalt 22 relativ zu einer Oberfläche des ersten Anzeigefelds 13 unter einem Winkel 90°-a nach links abgestrahlt. Dagegen wird ein zweiter Anzeigeinhalt 24 des zweiten Anzeigefelds 16 ebenfalls unter dem Winkel α, der hier allerdings von der zweiten Biegeebene 8 und dem dritten Anzeigefeld 30 entgegen dem Uhrzeigersinn nach rechts geschwenkt ist, abgestrahlt. Entsprechend wird der zweite Anzeigeinhalt 24 relativ zu einer Oberfläche des zweiten Anzeigefelds 16 unter einem Winkel 90°-a nach rechts abgestrahlt. Ein Anzeigeinhalt 32 des dritten Anzeigefelds 30 wird in der ersten Betriebsstellung parallel zu den Biegeebenen 15, 17 und senkrecht zu seiner Oberfläche abgestrahlt. Somit ist der erste Anzeigeeinhalt 22 in der ersten Betriebsstellung aus einer ersten Perspektive und der zweite Anzeigeinhalt 24 in der ersten Betriebsstellung aus einer zweiten Perspektive sichtbar, wobei Richtungen dieser beiden Anzeigeinhalte 22, 24 insgesamt unter einem Winkel zueinander orientiert sind, der doppelt so groß ist wie der Winkel α, d. h. unter einem Winkel 2α bzw. 2_{*}α.

In der anhand von Figur 2b vorgesehenen zweiten Betriebsstellung ist vorgesehen, dass das erste links angeordnete Anzeigefeld 13 unter einem Winkel 90°-a entgegen dem Uhrzeigersinn hin zu der ersten Biegeebene 15 und dem dritten Anzeigefeld 30 nach rechts geschwenkt ist, wohingegen das rechte zweite Anzeigefeld 16 ebenfalls unter dem Winkel 90°-a im Uhrzeigersinn nach links hin zu der zweiten Biegeebene 17 und dem dritten Anzeigefeld 30 geschwenkt ist. Dagegen sind eine Orientierung des dritten Anzeigefelds 30 und dessen Anzeigeinhalts 32 relativ zu der Halteeinrichtung 20 und somit der Innenwand in der zweiten Betriebsstellung im Vergleich zu der ersten Betriebsstellung unverändert.

Allerdings ist vorgesehen, dass ein jeweiliger Winkel 90°-a, unter dem der Anzeigeinhalt 22, 24 des ersten und zweiten Anzeigefelds 13, 16 in Bezug auf die erste Betriebsstellung relativ zu einer jeweiligen Oberfläche des jeweiligen Anzeigefelds 13, 16 abgestrahlt wird, auch in der zweiten Betriebsstellung beibehalten wird, wodurch sich ergibt, dass die Anzeigeinhalte 22, 24, 32 aller drei Anzeigefelder 13, 16, 30 in der zweiten Betriebsstellung zueinander parallel abgestrahlt werden. Bei der zweiten Ausführungsform bilden das erste und zweite Anzeigefeld 13, 16 ein Paar Anzeigefelder 13, 16, die symmetrisch zu dem dazwischen angeordneten fixierten dritten Anzeigefeld 30 angeordnet sowie dazu gegensinnig verschwenkbar sind.

## Patentansprüche

1. Anzeigeeinrichtung, die an einer Innenwand in einem Innenraum eines Fahrzeugs anordenbar sowie in mehrere Anzeigefelder (4, 6, 13, 16, 30) unterteilt ist, wobei zwei unmittelbar benachbarte Anzeigefelder (4, 6, 13, 16, 30) entlang einer gemeinsamen Achse miteinander verbunden sind, wobei diese zwei unmittelbar benachbarten Anzeigefelder (4, 6, 13, 16, 30) um die gemeinsame Achse relativ zueinander schwenkbar sind, wobei die Anzeigeeinrichtung (2, 40) mindestens eine Biegeebene (8, 15, 17) aufweist, wobei mindestens ein Anzeigefeld (4, 6, 13, 16) auch relativ zu der mindestens einen Biegeebene (8, 15, 17) schwenkbar ist, wobei für dieses mindestens eine relativ zu der mindestens einen Biegeebene (8, 15, 17) schwenkbare Anzeigefeld (4, 6, 13, 16) ein Winkel α einstellbar ist, unter dem dieses mindestens eine relativ zu der mindestens einen Biegeebene (8, 15, 17) schwenkbare Anzeigefeld (4, 6, 13, 16) einen Anzeigeinhalt (12, 14, 22, 24) relativ zu der mindestens einen Biegeebene (8, 15, 17) in den Innenraum abstrahlt, wenn eine Oberfläche dieses mindestens einen relativ zu der mindestens einen Biegeebene (8, 15, 17) schwenkbaren Anzeigefelds (4, 6, 13, 16) in einer ersten Betriebsstellung senkrecht zu der mindestens einen Biegeebene (8, 15, 17) orientiert ist, wobei die Oberflächen der Anzeigefelder (4, 6, 13, 16) in der ersten Betriebsstellung parallel zueinander sowie nebeneinander in einer gemeinsamen Ebene angeordnet und senkrecht zu der mindestens einen Biegeebene (8, 15, 17) orientiert sind, **dadurch gekennzeichnet, dass**
dieses mindestens eine relativ zu der mindestens einen Biegeebene (8, 15, 17) schwenkbare Anzeigefeld (4, 6, 13, 16) in einer zweiten Betriebsstellung unter einem Winkel 90°-a relativ zu der mindestens einen Biegeebene (8, 15, 17) geschwenkt ist, wobei dieses mindestens eine relativ zu der Biegeebene (8, 15, 17) schwenkbare Anzeigefeld (4, 6, 13, 16) den Anzeigeinhalt (12, 14, 22, 24) in der zweiten Betriebsstellung parallel zu der mindestens einen Biegeebene (8, 15, 17) in den Innenraum abstrahlt.

2. Anzeigeeinrichtung nach Anspruch 1, deren mindestens eine Biegeebene (8, 15, 17) unter einem jeweils vorgesehenen Winkel zu einer Oberfläche der Innenwand orientierbar ist.

3. Anzeigeeinrichtung, nach Anspruch 1 oder 2, bei dem der für das mindestens eine relativ zu der mindestens einen Biegeebene (8, 15, 17) schwenkbare Anzeigefeld (4, 6, 13, 16) vorgesehene Winkel α ein spitzer Winkel, größer 0° und kleiner +90° ist.

4. Anzeigeeinrichtung nach einem der voranstehenden Ansprüche, das mindestens ein Paar Anzeigefelder (4, 6, 13, 16) aufweist, wobei jedes der beiden Anzeigefelder (4, 6, 13, 16) relativ zu mindestens einer Biegeebene (8, 15, 17) schwenkbar ist, wobei die Oberfläche jedes schwenkbaren Anzeigefelds (4, 6, 13, 16) in der ersten Betriebsstellung senkrecht zu einer jeweiligen Biegeebene (8, 15, 17) orientiert ist, wobei die beiden Anzeigefelder (4, 6, 13, 16) einen jeweiligen Anzeigeinhalt (12, 14, 22, 24) unter einem jeweiligen Winkel α relativ zu der mindestens einen Biegeebene (8, 15, 17) abstrahlen, wobei die beiden Anzeigefelder (4, 6, 13, 16) die Anzeigeinhalte (12, 14, 22, 24) in unterschiedlichen Richtungen abstrahlen, die unter einem Winkel 2α zueinander orientiert sind, wobei die Oberfläche eines ersten der beiden Anzeigefelder (4, 6, 13, 16) in der zweiten Betriebsstellung unter einem Winkel 90°-a relativ zu der jeweiligen Biegeebene (8, 15, 17) geschwenkt ist, wobei die Oberfläche eines zweiten der beiden Anzeigefelder (4, 6, 13, 16) in der zweiten Betriebsstellung unter einem Winkel 90°-a relativ zu der jeweiligen Biegeebene (8, 15, 17) geschwenkt ist, wobei die beiden Anzeigefelder (4, 6, 13, 16) die Anzeigeinhalte (12, 14, 22, 24) zueinander parallel abstrahlen.

5. Anzeigeeinrichtung nach Anspruch 4, bei der die mindestens eine Biegeebene (8, 15, 17) zwischen den beiden Anzeigefeldern (4, 6, 13, 16) des mindestens einen Paars Anzeigefeldern (4, 6, 13, 16) angeordnet ist, wobei die beiden Anzeigefelder (4, 6, 13, 16) den jeweiligen Anzeigeinhalt (12, 14, 22, 24) in der ersten Betriebsstellung jeweils weg von der mindestens einen Biegeebene (8, 15, 17) in unterschiedliche Richtungen abstrahlen.

6. Anzeigeeinrichtung nach einem der voranstehenden Ansprüche, bei dem der Winkel α für jedes Anzeigefeld (4, 6, 13, 16) fest eingestellt ist.

7. Anzeigeeinrichtung nach einem der voranstehenden Ansprüche, das mindestens ein Anzeigefeld (30) aufweist, das relativ zu der mindestens einen Biegeebene (15, 17) ortsfest fixiert ist, wobei eine Oberfläche dieses mindestens einen fixierten Anzeigefelds (30) senkrecht zu der mindestens einen Biegeebene (15, 17) orientiert ist, wobei dieses mindestens eine fixierte Anzeigefeld (30) einen Anzeigeeinhalt (32) parallel zu der mindestens einen Biegeebene (15, 17) ausstrahlt.

8. Anzeigeeinrichtung nach einem der Ansprüche 4 bis 6 und 7, die mindestens ein Paar relativ zu der mindestens einen Biegeebene (15, 17) schwenkbare Anzeigefelder (13, 16) und ein relativ zu der mindestens einen Biegeebene (15, 17) fixiertes Anzeigefeld (30) aufweist, wobei das relativ zu der mindestens einen Biegeebene (15, 17) fixierte Anzeigefeld (30) zwischen den beiden relativ zu der mindestens einen Biegeebene (15, 17) schwenkbaren Anzeigefeldern (13, 16) angeordnet ist.

9. Anzeigeeinrichtung nach einem der voranstehenden Ansprüche, die mindestens eine Halteeinrichtung (10) aufweist, die zwei zueinander parallel angeordnete Außenflächen aufweist, wobei eine erste der beiden Außenflächen mit mindestens einem der Anzeigefelder (4, 6, 13, 16, 30) verbunden ist, wobei eine zweite der beiden Außenflächen an der Innenwand befestigbar ist.

10. Anzeigeeinrichtung nach einem der voranstehenden Ansprüche, die an einer in einer Vorwärtsfahrtrichtung des Fahrzeugs vorne angeordneten Innenwand des Fahrzeugs zwischen zwei Sitzen des Fahrzeugs anordenbar ist, wobei das mindestens eine relativ zu der mindestens einen Biegeebene (8, 15, 17) schwenkbare Anzeigefeld (4, 6, 13, 16) den Anzeigeinhalt (12, 14, 22, 24) in der ersten Betriebsstellung in Richtung eines der beiden Sitze abstrahlt.

11. Verfahren zum Darstellen mindestens eines Anzeigeeinhalts in einem Innenraum eines Fahrzeugs mit einer Anzeigeeinrichtung (2, 40), die an einer Innenwand in einem Innenraum eines Fahrzeugs angeordnet wird sowie in mehrere Anzeigefelder (4, 6, 13, 16, 30) unterteilt ist, wobei zwei unmittelbar benachbarte Anzeigefelder (4, 6, 13, 16, 30) entlang einer gemeinsamen Achse miteinander verbunden sind, wobei diese zwei unmittelbar benachbarten Anzeigefelder (4, 6, 13, 16, 30) um die gemeinsame Achse relativ zueinander schwenkbar sind, wobei die Anzeigeeinrichtung (2, 40) mindestens eine Biegeebene (8, 15, 17) aufweist, wobei mindestens ein Anzeigefeld (4, 6, 13, 16) auch relativ zu der mindestens einen Biegeebene (8, 15, 17) schwenkbar ist, wobei für dieses mindestens eine relativ zu der mindestens einen Biegeebene (8, 15, 17) schwenkbare Anzeigefeld (4, 6, 13, 16) ein Winkel α eingestellt wird, unter dem ein Anzeigeinhalt (12, 14, 22, 24) dieses mindestens einen relativ zu der mindestens einen Biegeebene (8, 15, 17) schwenkbaren Anzeigefelds (4, 6, 13, 16) relativ zu der mindestens einen Biegeebene (8, 15, 17) in den Innenraum abgestrahlt wird, wenn eine Oberfläche dieses mindestens einen relativ zu der mindestens einen Biegeebene (8, 15, 17) schwenkbaren Anzeigefelds (4, 6, 13, 16) in einer ersten Betriebsstellung senkrecht zu der mindestens einen Biegeebene (8, 15, 17) orientiert wird, wobei die Oberflächen der Anzeigefelder (4, 6, 13, 16) in der ersten Betriebsstellung parallel zueinander sowie nebeneinander in einer gemeinsamen Ebene angeordnet und senkrecht zu der mindestens einen Biegeebene (8, 15, 17) orientiert sind,
**dadurch gekennzeichnet, dass**
dieses mindestens eine relativ zu der mindestens einen Biegeebene (8, 15, 17) schwenkbare Anzeigefeld (4, 6, 13, 16) in einer zweiten Betriebsstellung unter einem Winkel 90°-α relativ zu der mindestens einen Biegeebene (8, 15, 17) geschwenkt wird, wobei der Anzeigeinhalt (12, 14, 22, 24) dieses mindestens einen relativ zu der Biegeebene (8, 15, 17) schwenkbaren Anzeigefelds (4, 6, 13, 16) in der zweiten Betriebsstellung parallel zu der mindestens einen Biegeebene (8, 15, 17) abgestrahlt wird.

## Claims

1. Display device that can be arranged on an inner wall in an interior of a vehicle and is subdivided into a plurality of display panels (4, 6, 13, 16, 30), wherein two directly adjacent display panels (4, 6, 13, 16, 30) are connected to one another along a common axis, wherein said two directly adjacent display panels (4, 6, 13, 16, 30) can be pivoted relative to one another about the common axis, wherein the display device (2, 40) has at least one bending plane (8, 15, 17), wherein at least one display panel (4, 6, 13, 16) can also be pivoted relative to the at least one bending plane (8, 15, 17), wherein for said at least one display panel (4, 6, 13, 16) that can be pivoted relative to the at least one bending plane (8, 15, 17) an angle α can be set, at which angle said at least one display panel (4, 6, 13, 16) that can be pivoted relative to the at least one bending plane (8, 15, 17) emits a display content (12, 14, 22, 24) into the interior relative to the at least one bending plane (8, 15, 17) when a surface of said at least one display panel (4, 6, 13, 16) that can be pivoted relative to the at least one bending plane (8, 15, 17) is oriented in a first operating position perpendicularly to the at least one bending plane (8, 15, 17), wherein the surfaces of the display panels (4, 6, 13, 16) are arranged in the first operating position parallel to one another and next to one another in a common plane and are oriented perpendicularly to the at least one bending plane (8, 15, 17), **characterised in that**
said at least one display panel (4, 6, 13, 16) that can be pivoted relative to the at least one bending plane (8, 15, 17) is pivoted in a second operating position at an angle 90°-α relative to the at least one bending plane (8, 15, 17), wherein said at least one display panel (4, 6, 13, 16) that can be pivoted relative to the bending plane (8, 15, 17) emits the display content (12, 14, 22, 24) in the second operating position into the interior parallel to the at least one bending plane (8, 15, 17).

2. Display device according to claim 1, the at least one bending plane (8, 15, 17) of which can be oriented at a respective specified angle to a surface of the inner wall.

3. Display device according to claim 1 or 2, wherein the angle α specified for the at least one display panel (4, 6, 13, 16) that can be pivoted relative to the at least one bending plane (8, 15, 17) is an acute angle, greater than 0° and less than +90°.

4. Display device according to any one of the preceding claims, which has at least one pair of display panels (4, 6, 13, 16), wherein each of the two display panels (4, 6, 13, 16) can be pivoted relative to at least one bending plane (8, 15, 17), wherein the surface of each pivotable display panel (4, 6, 13, 16) is oriented in the first operating position perpendicular to a respective bending plane (8, 15, 17), wherein the two display panels (4, 6, 13, 16) emit a respective display content (12, 14, 22, 24) at a respective angle α relative to the at least one bending plane (8, 15, 17), wherein the two display panels (4, 6, 13, 16) emit the display contents (12, 14, 22, 24) in different directions, which are oriented at an angle 2α to one another, wherein the surface of a first of the two display panels (4, 6, 13, 16) is pivoted in the second operating position at an angle 90°-α relative to the respective bending plane (8, 15, 17), wherein the surface of a second of the two display panels (4, 6, 13, 16) is pivoted in the second operating position at an angle 90°-α relative to the respective bending plane (8, 15, 17), wherein the two display panels (4, 6, 13, 16) emit the display contents (12, 14, 22, 24) parallel to one another.

5. Display device according to claim 4, in which the at least one bending plane (8, 15, 17) is arranged between the two display panels (4, 6, 13, 16) of the at least one pair of display panels (4, 6, 13, 16), wherein the two display panels (4, 6, 13, 16) each emit the respective display content (12, 14, 22, 24) in the first operating position away from the at least one bending plane (8, 15, 17) in different directions.

6. Display device according to any one of the preceding claims, in which the angle α is fixed for each display panel (4, 6, 13, 16).

7. Display device according to any one of the preceding claims, which has at least one display panel (30) that is fixed in a stationary manner relative to the at least one bending plane (15, 17), wherein a surface of said at least one fixed display panel (30) is oriented perpendicularly to the at least one bending plane (15, 17), wherein said at least one fixed display panel (30) emits a display content (32) parallel to the at least one bending plane (15, 17).

8. Display device according to any one of claims 4 to 6 and 7, which has at least one pair of display panels (13, 16) that can be pivoted relative to the at least one bending plane (15, 17) and a display panel (30) that is fixed relative to the at least one bending plane (15, 17), wherein the display panel (30) that is fixed relative to the at least one bending plane (15, 17) is arranged between the two display panels (13, 16) that can be pivoted relative to the at least one bending plane (15, 17).

9. Display device according to any one of the preceding claims, which has at least one holding device (10) that has two outer surfaces arranged parallel to one another, wherein a first of the two outer surfaces is connected to at least one of the display panels (4, 6, 13, 16, 30), wherein a second of the two outer surfaces can be fastened to the inner wall.

10. Display device according to any one of the preceding claims, which can be arranged on an inner wall of the vehicle arranged at, in a forward travel direction of the vehicle, the front of the vehicle between two seats of the vehicle, wherein the at least one display panel (4, 6, 13, 16) that can be pivoted relative to the at least one bending plane (8, 15, 17) emits the display content (12, 14, 22, 24) in the first operating position in the direction of one of the two seats.

11. Method for displaying at least one display content in an interior of a vehicle with a display device (2, 40) which is arranged on an interior wall in an interior of a vehicle and is subdivided into a plurality of display panels (4, 6, 13, 16, 30), wherein two directly adjacent display panels (4, 6, 13, 16, 30) are connected to one another along a common axis, wherein said two directly adjacent display panels (4, 6, 13, 16, 30) can be pivoted relative to one another about the common axis, wherein the display device (2, 40) has at least one bending plane (8, 15, 17), wherein at least one display panel (4, 6, 13, 16) can also be pivoted relative to the at least one bending plane (8, 15, 17), wherein for said at least one display panel (4, 6, 13, 16) that can be pivoted relative to the at least one bending plane (8, 15, 17) an angle α is set, at which angle a display content (12, 14, 22, 24) of said at least one display panel (4, 6, 13, 16) that can be pivoted relative to the at least one bending plane (8, 15, 17) is emitted into the interior when a surface of said at least one display panel (4, 6, 13, 16) that can be pivoted relative to the at least one bending plane (8, 15, 17) is oriented in a first operating position perpendicularly to the at least one bending plane (8, 15, 17), wherein the surfaces of the display panels (4, 6, 13, 16) in the first operating position are arranged parallel to one another and next to one another in a common plane and are oriented perpendicularly to the at least one bending plane (8, 15, 17), **characterised in that** said at least one display panel (4, 6, 13, 16) that can be pivoted relative to the at least one bending plane (8, 15, 17) is pivoted in a second operating position at an angle 90°-α relative to the at least one bending plane (8, 15, 17), wherein the display content (12, 14, 22, 24) of said at least one display panel (4, 6, 13, 16) that can be pivoted relative to the at least one bending plane (8, 15, 17) is emitted parallel to the at least one bending plane (8, 15, 17) in the second operating position.

## Revendications

1. Dispositif d'affichage qui peut être disposé sur une paroi intérieure dans l'habitacle d'un véhicule et qui est divisé en plusieurs champs d'affichage (4, 6, 13, 16, 30), dans lequel deux champs d'affichage (4, 6, 13, 16, 30) directement voisins sont connectés entre eux le long d'un axe commun, dans lequel ces deux champs d'affichage (4, 6, 13, 16, 30) directement voisins pouvant pivoter l'un par rapport à l'autre autour de l'axe commun, dans lequel le dispositif d'affichage (2, 40) présente au moins un plan de flexion (8, 15, 17), dans lequel au moins un champ d'affichage (4, 6, 13, 16) peut également pivoter par rapport à l'au moins un plan de flexion (8, 15, 17), dans lequel un angle α peut être défini pour cet au moins un champ d'affichage (4, 6, 13, 16) pouvant pivoter par rapport à l'au moins un plan de flexion (8, 15, 17), sous lequel cet au moins un champ d'affichage (4, 6, 13, 16) pivotant par rapport à l'au moins un plan de flexion (8, 15, 17) émet un contenu d'affichage (12, 14, 22, 24) dans l'habitacle par rapport à l'au moins un plan de flexion (8, 15, 17), lorsqu'une surface de cet au moins un champ d'affichage (4, 6, 13, 16) pouvant pivoter par rapport à l'au moins un plan de flexion (8, 15, 17) est, dans une première position de fonctionnement, orientée perpendiculairement à l'au moins un plan de flexion (8, 15, 17), dans lequel les surfaces des champs d'affichage (4, 6, 13, 16) sont disposées dans la première position de fonctionnement parallèlement les unes aux autres ainsi que les unes à côté des autres dans un plan commun et orientées perpendiculairement à l'au moins un plan de flexion (8, 15, 17), **caractérisé en ce que**
cet au moins un champ d'affichage (4, 6, 13, 16) pouvant pivoter par rapport à l'au moins un plan de flexion (8, 15, 17) est, dans une seconde position de fonctionnement, pivoté sous un angle de 90°-α par rapport à l'au moins un plan de flexion (8, 15, 17), dans lequel cet au moins un champ d'affichage (4, 6, 13, 16) peut pivoter par rapport au plan de flexion (8, 15, 17) émettant le contenu d'affichage (12, 14, 22, 24) dans la seconde position de fonctionnement parallèlement à l'au moins un plan de flexion (8, 15, 17) dans l'habitacle.

2. Dispositif d'affichage selon la revendication 1, dont au moins un plan de flexion (8, 15, 17) peut être orienté sous un angle prévu par rapport à une surface de la paroi intérieure.

3. Dispositif d'affichage selon la revendication 1 ou 2, dans lequel l'angle α prévu pour l'au moins un champ d'affichage (4, 6, 13, 16) pouvant pivoter par rapport à l'au moins un plan de flexion (8, 15, 17) est un angle aigu, supérieur à 0° et inférieur à +90°.

4. Dispositif d'affichage selon l'une quelconque des revendications précédentes, qui présente au moins une paire de champs d'affichage (4, 6, 13, 16), dans lequel chacun des deux champs d'affichage (4, 6, 13, 16) peut être pivoté par rapport à au moins un plan de flexion (8, 15, 17), dans lequel la surface de chaque champ d'affichage pivotant (4, 6, 13, 16) est, dans la première position de fonctionnement, orientée perpendiculairement à un plan de flexion respectif (8, 15, 17), dans lequel les deux champs d'affichage (4, 6, 13, 16) émettent un contenu d'affichage respectif (12, 14, 22, 24) sous un angle α respectif par rapport à l'au moins un plan de flexion (8, 15, 17), dans lequel les deux champs d'affichage (4, 6, 13, 16) émettent les contenus d'affichage (12, 14, 22, 24) dans différentes directions, qui sont orientées sous un angle 2α l'une par rapport à l'autre, dans lequel la surface d'un premier des deux champs d'affichage (4, 6, 13, 16) est, dans la seconde position de fonctionnement, pivotée sous un angle de 90°-α par rapport au plan de flexion respectif (8, 15, 17), dans lequel la surface d'un second des deux champs d'affichage (4, 6, 13, 16) est, dans la seconde position de fonctionnement pivotée sous un angle de 90°-α par rapport au plan de flexion respectif (8, 15, 17), dans lequel les deux champs d'affichage (4, 6, 13, 16) émettent les contenus d'affichage (12, 14, 22, 24) parallèlement les uns aux autres.

5. Dispositif d'affichage selon la revendication 4, dans lequel l'au moins un plan de flexion (8, 15, 17) est disposé entre les deux champs d'affichage (4, 6, 13, 16) de l'au moins une paire de champs d'affichage (4, 6, 13, 16), dans lequel les deux champs d'affichage (4, 6, 13, 16) émettent le contenu d'affichage respectif (12, 14, 22, 24) dans la première position de fonctionnement respectivement à l'écart de l'au moins un plan de flexion (8, 15, 17) dans différentes directions.

6. Dispositif d'affichage selon l'une quelconque des revendications précédentes, dans lequel l'angle α est défini de manière fixe pour chaque champ d'affichage (4, 6, 13, 16).

7. Dispositif d'affichage selon l'une quelconque des revendications précédentes, qui présente au moins un champ d'affichage (30) qui est fixé de manière stationnaire par rapport à l'au moins un plan de flexion (15, 17), dans lequel une surface de cet au moins un champ d'affichage fixé (30) est orientée perpendiculairement à l'au moins un plan de flexion (15, 17), dans lequel cet au moins un champ d'affichage fixé (30) émet un contenu d'affichage (32) parallèle à l'au moins un plan de flexion (15, 17).

8. Dispositif d'affichage selon l'une quelconque des revendications 4 à 6 et 7, qui présente au moins une paire de champs d'affichage (13, 16) pivotant par rapport à l'au moins un plan de flexion (15, 17) et un champ d'affichage (30) fixé par rapport à l'au moins un plan de flexion (15, 17), dans lequel le champ d'affichage (30) fixé par rapport à l'au moins un plan de flexion (15, 17) est disposé entre les deux champs d'affichage (13, 16) pivotant par rapport à l'au moins un plan de flexion (15, 17).

9. Dispositif d'affichage selon l'une quelconque des revendications précédentes, qui présente au moins un dispositif de maintien (10), qui présente deux surfaces extérieures disposées parallèlement l'une à l'autre, dans lequel une première des deux surfaces extérieures est connectée à au moins un des champs d'affichage (4, 6, 13, 16, 30), dans lequel une seconde des deux surfaces extérieures peut être fixée à la paroi intérieure.

10. Dispositif d'affichage selon l'une quelconque des revendications précédentes, qui peut être disposé sur une paroi intérieure du véhicule disposée à l'avant dans un sens de marche avant du véhicule entre deux sièges du véhicule, dans lequel l'au moins un champ d'affichage (4, 6, 13, 16) peut pivoter par rapport à l'au moins un plan de flexion (8, 15, 17) émet le contenu d'affichage (12, 14, 22, 24) dans la première position de fonctionnement en direction d'un des deux sièges.

11. Procédé pour représenter au moins un contenu d'affichage dans un habitacle d'un véhicule avec un dispositif d'affichage (2, 40) qui est disposé sur une paroi intérieure dans un habitacle d'un véhicule et qui est divisé en plusieurs champs d'affichage (4, 6, 13, 16, 30), dans lequel deux champs d'affichage (4, 6, 13, 16, 30) directement voisins sont connectés entre eux le long d'un axe commun, dans lequel ces deux champs d'affichage (4, 6, 13, 16, 30) directement voisins pouvant pivoter l'un par rapport à l'autre autour de l'axe commun, dans lequel le dispositif d'affichage (2, 40) présente au moins un plan de flexion (8, 15, 17), dans lequel au moins un champ d'affichage (4, 6, 13, 16) peut également pivoter par rapport à l'au moins un plan de flexion (8, 15, 17), dans lequel un angle α est défini pour cet au moins un champ d'affichage (4, 6, 13, 16) pouvant pivoter par rapport à l'au moins un plan de flexion (8, 15, 17), sous lequel un contenu d'affichage (12, 14, 22, 24) de cet au moins un champ d'affichage (4, 6, 13, 16) pouvant pivoter par rapport à l'au moins un plan de flexion (8, 15, 17) est émis dans l'habitacle par rapport à l'au moins un plan de flexion (8, 15, 17), lorsqu'une surface de cet au moins un champ d'affichage (4, 6, 13, 16) pouvant pivoter par rapport à l'au moins un plan de flexion (8, 15, 17) est, dans une première position de fonctionnement, orientée perpendiculairement à l'au moins un plan de flexion (8, 15, 17), dans lequel les surfaces des champs d'affichage (4, 6, 13, 16) sont disposées dans la première position de fonctionnement parallèlement les unes aux autres ainsi que les unes à côté des autres dans un plan commun et orientées perpendiculairement à l'au moins un plan de flexion (8, 15, 17), **caractérisé en ce que** cet au moins un champ d'affichage (4, 6, 13, 16) pouvant pivoter par rapport à l'au moins un plan de flexion (8, 15, 17) est, dans une seconde position de fonctionnement, pivoté sous un angle de 90°-α par rapport à l'au moins un plan de flexion (8, 15, 17), dans lequel le contenu d'affichage (12, 14, 22, 24) de cet au moins un champ d'affichage (4, 6, 13, 16) pouvant pivoter par rapport au plan de flexion (8, 15, 17) est émis dans la seconde position de fonctionnement parallèlement à l'au moins un plan de flexion (8, 15, 17).
